# EUROPEAN PATENT APPLICATION

(11) **EP 4 772 400 A1**
(43) Date of publication of application: **08.07.2026**
(21) Application number: 25224689.7
(22) Date of filing: 17.12.2025
(51) Int. Cl.: B60R 9/045, B60R 9/048, B60R 9/10, B60R 9/06, B62H 1/04, B62H 3/00

(54) **BICYCLE VEHICLE MOUNT**

(30) Priority: 06.01.2025 GB 202500089
(71) Applicant: Hand Engineering Ltd, London SE77PU (GB)
(72) Inventor: Hand, Enda, London (GB)
(74) Representative: FRKelly

(57) **Abstract**

A two-legged kickstand bicycle vehicle mount is provided. The dual kickstand bicycle vehicle comprising a bicycle wheel retaining member and a pair of laterally spaced kickstand retaining members longitudinally offset of the bicycle wheel retaining member.

## Description

### Field of invention

This invention relates to a bicycle mount, in particular for use in mounting a bicycle with a kickstand having two legs on top of a vehicle.

### Background of the invention

Bicycle vehicle mounts (also called racks or stands) are used when transporting bicycles or bikes, particularly when transporting them by car or trailer. Some bicycle mounts may be fitted to roof racks on top of cars. Current roof bicycle mounts attach to the front and back wheels of the bicycle. They may also connect to the frame of the bicycle. In some cases a bicycle mounted by its front and back wheels may not be secure. In recent years many new or alternative forms of bicycle have become popular, such as cargo bikes, many of which incorporate motors and batteries to provide pedal assisted power to assist with the additional loads being transported by these bicycles. This results in larger and heavier bicycles, many of which are not suitable to be transported in a stable manner by means of conventional bicycle vehicle mounts. This is especially true for cargo bikes which may be larger and/or heavier than a standard bike.

Existing bicycle mounts may also be relatively large and difficult to transport.

It is an object of the present invention to provide an improved bicycle vehicle mount which addresses some of the above mentioned problems of the prior art or at least to provide the public with a useful choice.

### Summary of the invention

According to a first aspect of the invention, a two-legged kickstand bicycle vehicle mount is provided comprising a bicycle wheel retaining member; and a pair of laterally spaced kickstand retaining members longitudinally offset of the bicycle wheel retaining member.

Preferably, the kickstand retaining members are rotatable about a hinged connection to the bicycle wheel retaining member.

Preferably, the bicycle vehicle mount further comprises a brace to secure the kickstand retaining members at a required angle during use.

Preferably, the brace can be secured in one of a plurality of positions depending on a location of legs of a kickstand.

Preferably, each kickstand retaining member comprises a channel configured to receive a respective leg of a kickstand.

Preferably, the channel is substantially u-shaped.

Preferably, each kickstand retaining member comprises a clamp member configured to clamp onto a leg of a kickstand.

Preferably, each kickstand retaining member comprises a kickstand support configured to receive a respective leg of a kickstand.

Preferably, the kickstand support comprises the channel.

Preferably, each kickstand retaining member comprises an elongate leg member.

Preferably, each kickstand support is adjustably connected to the respective leg member and locatable in a plurality of positions along the length of the leg member.

Preferably, the bicycle wheel retaining member comprises an elongate channel configured to receive a bicycle wheel.

Preferably, the elongate channel is u-shaped.

Preferably, the elongate channel may comprise one or more blocks in the channel to prevent movement of the bicycle wheel within the channel during use.

Preferably, the bicycle wheel retaining member comprises an attachment means to retain the bicycle wheel during use.

Preferably, the bicycle wheel retaining member is configured to receive a back bicycle wheel.

Preferably, the kickstand retaining members and the bicycle wheel retaining member are each removably connectable to a transport vehicle in use.

Preferably, each of the kickstand retaining members and the bicycle wheel retaining member comprises an adjustable roof rack adapter configured to connect to a roof rack in use.

Preferably, the kickstand retaining members are rotatable such that the bicycle mount is displaceable between an expanded and collapsed configuration.

Preferably, the kickstand retaining members are rotatable such that they extend alongside the bicycle wheel retaining member.

Preferably, the kickstand retaining members are rotatable such that an angle between the bicycle wheel retaining member and each of the kickstand retaining members is smaller compared to when in use.

A "two-legged kickstand" is referred to in this specification and is considered to be a kickstand comprising at least two legs, the end of each leg configured to contact the ground to hold up the bicycle. This may also be known as a "dual-leg kickstand", "double-leg kickstand", "duostand", "dual-foot kickstand", "bi-pod centre stand", "forked kickstand", or "split kickstand". In some examples, one or more of the legs of the kickstand may further divide into segments that are configured to contact the ground. In some examples, there may be two separate kickstands rather than a two-legged kickstand. The bicycle mount of the present invention may also be configured for use on bicycles with two separate kickstands.

### Brief description of the invention

The present invention will now be described with reference to the accompanying drawings, in which:
- Figure 1: illustrates a perspective view of a bicycle vehicle mount according to an embodiment of the invention with the bicycle vehicle mount attached to a roof rack (partially shown) and having a bicycle (partially schematically shown) mounted thereon;
- Figure 2: illustrates a perspective view of the bicycle vehicle mount of Figure 1 in an open configuration;
- Figure 3: illustrates a top view of the bicycle vehicle mount of Figure 2, showing the longitudinal axis L-L of a bicycle wheel retaining member;
- Figure 4: illustrates a perspective view of the bicycle vehicle mount of Figure 1 in a half open configuration;
- Figure 5: illustrates a top view of the bicycle vehicle mount of Figure 4;
- Figure 6: illustrates a perspective view of the bicycle vehicle mount of Figure 1 in a closed configuration;
- Figure 7: illustrates a top view of the bicycle vehicle mount of Figure 6;
- Figure 8: illustrates a side view of a portion of the bicycle vehicle mount of Figure 1 with a kickstand retainer and a kickstand leg (partially shown);
- Figure 9: illustrates a front view of a portion of the bicycle vehicle mount of Figure 1 with a kickstand retainer and a kickstand leg (partially shown); and
- Figure 10: illustrates a back view of the portion of the bicycle vehicle mount of Figure 9.

### Detailed description of the invention

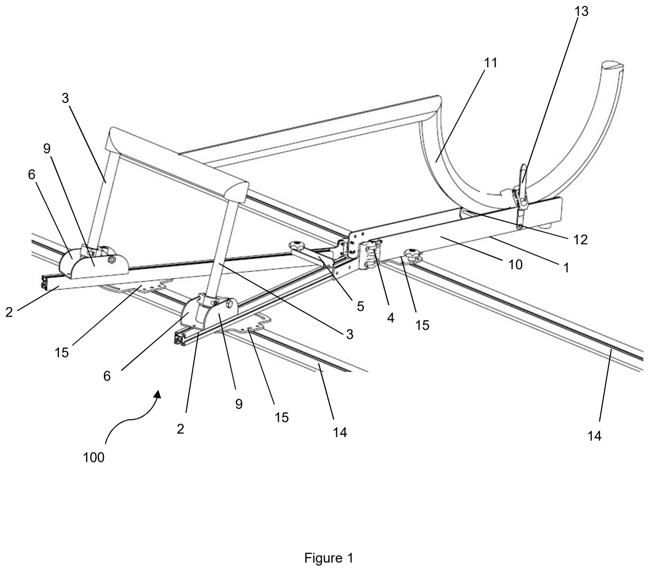

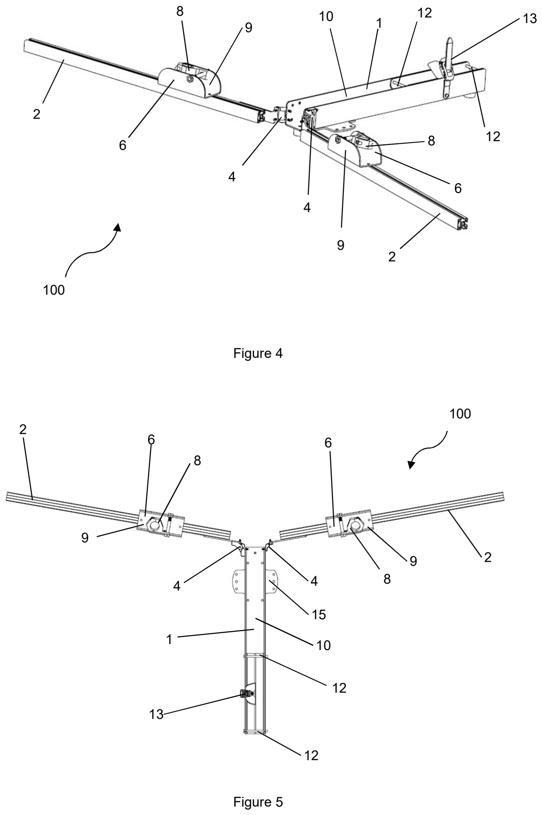

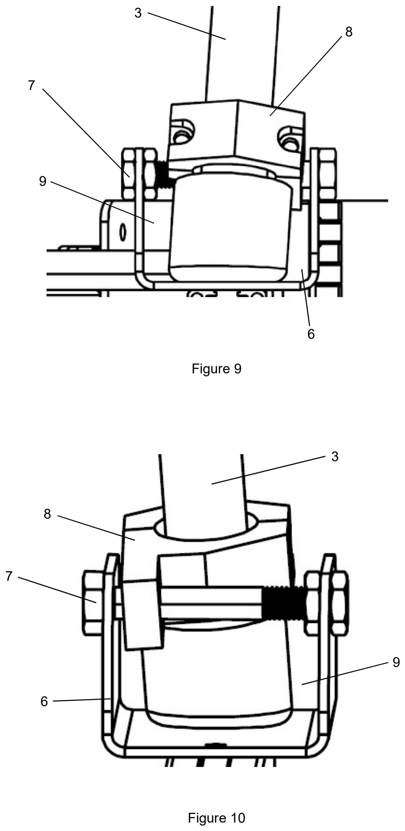

Referring now to Figures 1 to 10 of the accompanying drawings there is illustrated a bicycle vehicle mount, generally indicated by arrow 100. The bicycle vehicle mount 100 is configured to transport bicycles on a vehicle, for example, transporting bicycles on cars or trailers. The bicycle may be mounted on the top of the car, for instance on a roof rack or directly to roof rails, or on the rear of the car, for example suitable connected to a tow bar. The bicycle vehicle mount may be configured for use in mounting a two-legged kickstand bicycle, a bicycle with two kickstand legs. The kickstand legs may be located symmetrically about the central frame of the bicycle. The bicycle may be a cargo bike which is typically larger and/or heavier than a standard bike. Cargo bikes may have two wheels and a two-legged kickstand configuration to support the cargo area.

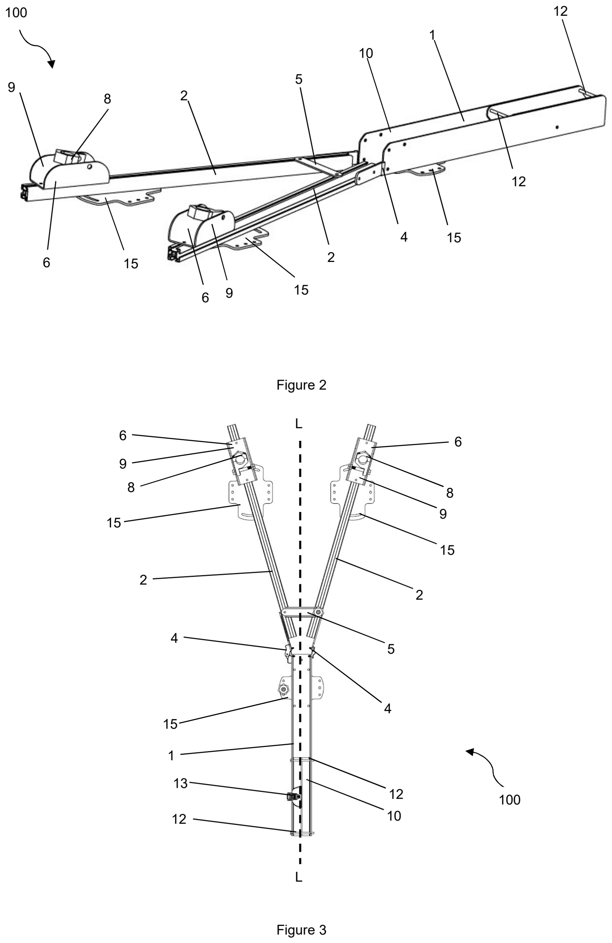

The bicycle vehicle mount 100 may comprise a bicycle wheel retaining member 1 and a pair of laterally spaced kickstand retaining members 2. The pair of laterally spaced kickstand retaining members 2 may be longitudinally offset of the bicycle wheel retaining member 1. Each of the kickstand retaining members is configured to receive a leg of the kickstand 3 of the bicycle in use. The bicycle vehicle mount 100 may have three points of retention with the bicycle being transported, for example each of the two legs of the kickstand and the wheel. The kickstand retaining members 2 may have a different longitudinal position compared to the bicycle wheel retaining member 1. Figure 3 shows the longitudinal axis L-L of the bicycle wheel retaining member 1. As shown, the kickstand retaining members 2 have a different position along L-L compared to the bicycle wheel retaining member 1. The kickstand retaining members 2 are also spaced laterally, for example in use the kickstand retaining members 2 are spaced apart in a direction perpendicular to L-L.

In the example shown in the figures, the kickstand retaining members 2 are located at one end of the bicycle wheel retaining member 1. As best shown in Figures 3 to 7, each kickstand retaining member 2 may be rotatable about a hinged connection 4. The hinged connection 4 may be a pin hinge. In other examples, not shown, the kickstand retaining members 2 may have a fixed connection to the bicycle wheel retaining member 1. The kickstand retaining members 2 may have a removable connection to the bicycle wheel retaining member 1. In some examples, the kickstand retaining members 2 may connect to one of a plurality of positions on the bicycle wheel retaining member 1 depending on the bicycle being transported and the location of the legs of the kickstand 3.

In the example shown, the kickstand retaining members 2 form a v-shape when in use and viewed from the top. In the example shown, the bicycle vehicle mount 100 further comprises a brace 5 to secure the kickstand retaining members 2 at a required angle during use. The brace 5 may be secured in one of a plurality of positions depending on a location of the legs of the kickstand 3. In some examples, the kickstand retaining members 2 may be at an angle to each other which is less than 90°, in some examples the angle may be in the range 10° - 180°. The required angle may depend on the model of two-legged kickstand bicycle being transported. The two legs of the kickstand 3 will typically be separated by a specific distance and therefore the kickstand retaining members 2 are also required to be located the same distance apart so they may receive and retain the legs of the kickstand 3 of the bicycle. The brace 5 may be fixedly connected to one of the kickstand retaining members 2 and adjustably connected to the other kickstand retaining member 2. The adjustable connection may be in the form of a fastener and one or more corresponding apertures. In other examples, the brace 5 may be adjustably connected to each of the kickstand retaining members 2. In other examples, the kickstand retaining members 2 may be held in place by other means, for example the hinged connection 4 may be able to be fixed in a position.

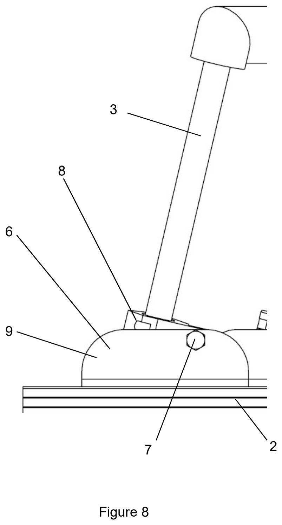

Each kickstand retaining member 2 may comprise a channel 6 configured to receive the respective kickstand 3. In the example shown in the figures, the channel 6 is substantially u-shaped. The channel 6 may have another shape, for example it may be v-shaped, or box-shaped. Each kickstand retaining member 2 may comprise a clamp member 7 configured to clamp onto the leg of the kickstand 3. The clamp member 7 may hold the leg of the kickstand 3 at a desired position in the channel 6. As best seen in Figures 8 to 10, the clamp member 7 comprises a mount 8 enclosing the leg of the kickstand 3. The mount 8 comprises an aperture. A fastener passes through the mount aperture and a channel aperture to secure the mount 8 to the channel 6. In other forms, the clamp member 7 may comprise a different means of clamping the leg of the kickstand 3 to the channel 6, for instance a butterfly clamp or strap. Each kickstand retaining member 2 may comprise a kickstand support 9 configured to receive the respective leg of the kickstand 3. In the example shown in the figures, the kickstand support 9 comprises the channel 6. Each kickstand retaining member 2 may comprise an elongate leg member. Each kickstand support 9 may be adjustably connected to the respective leg member and locatable in a plurality of positions along the length of the leg member. The kickstand support 9 may be positioned along the length of the leg member to align with the kickstand 3 of the bicycle being transported during use. In an alternate example, not shown, the channel 6 may extend along the length of the leg member or may form the leg member.

The bicycle wheel retaining member 1 may comprise an elongate channel 10 configured to receive a wheel 11 of the bicycle being transported. The wheel 11 may be the back wheel of the bicycle, for instance if transporting a standard cargo bike. However, it may also be a front wheel of the bicycle in other examples. The elongate channel 10 may be substantially v-shaped. The elongate channel 10 may have another shape, for example it may be u-shaped, or box-shaped. The elongate channel 10 may comprise side walls between which the wheel 11 fits in use. The wheel 11 may fit snug between the side walls, for instance the wheel 11 may abut the side walls in use, to limit the movement of the bicycle during transport. The elongate channel 10 may also comprise one or more blocks 12 or supports. The blocks 12 may be located in the channel 10 and may prevent movement of the wheel 11 within the channel 10 during use. The blocks 12 may prevent longitudinal movement of the wheel 11 within the channel 10. The blocks 12 may also provide a support or rest for the wheel 11 to be held or retained during transport. An attachment means 13 may be used to hold the wheel 11 within the channel 10. In some examples the attachment means 13 may be in the form of a strap, clips or other retaining means.

The bicycle wheel retaining member 1 and the kickstand retaining members 2 may be each removably connected to the transport vehicle in use. The transport vehicle may comprise a roof rack 14. As shown in Figure 1, each of the kickstand retaining members 2 and bicycle wheel retaining member 1 may comprise an adjustable roof rack adapter 15 configured to connect to the roof rack 14 in use. In the example shown, the roof rack adapter 15 comprises a plate connected to one of the kickstand retaining members 2 or bicycle wheel retaining member 1. The plate may then be fastened to the roof rack 14. The plate may have a plurality of apertures to allow adjustability of the connection and/or connection to different sizes, types, or styles of roof racks. In other examples the roof rack adapter 15 may involve a clip mechanism or a snap-fit connection.

In the example shown in the figures, the bicycle vehicle mount 100 is configured to be adjustable to suit a plurality of different two-legged kickstand bicycles depending on the type or model being transported. In other examples, the bicycle vehicle mount 100 may have a fixed configuration such that it can transport a specific type of two-legged kickstand bicycle, for instance the kickstand retaining members 2 may be in a fixed position relative to the bicycle wheel retaining member 1 to enable transport of a specific model of two-legged kickstand bicycle. Likewise, the kickstand supports 9 may also be in a fixed position on the leg members to suit a specific model of two-legged kickstand bicycle.

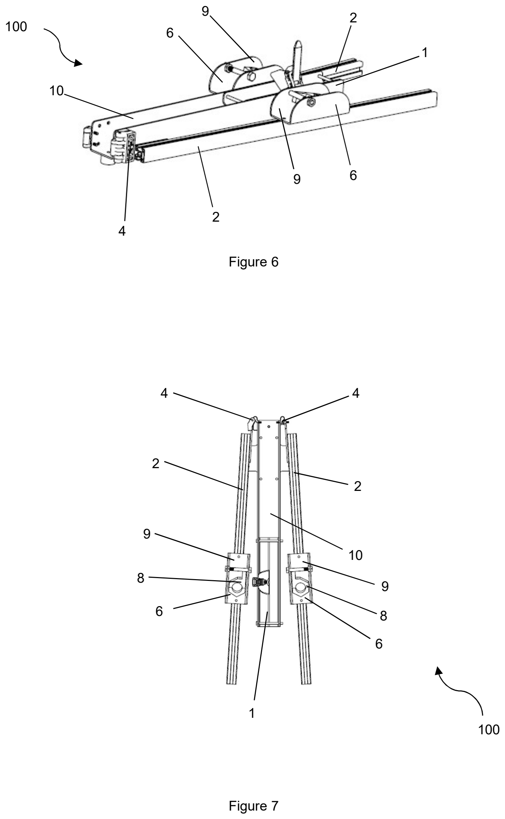

The bicycle vehicle mount 100 may also be configured to move between a first open or expanded configuration when it is being used to transport a bicycle and a second closed or collapsed configuration when it is not in use. The second configuration may be more compact than the first configuration and may allow for easier transport or storage of the bicycle vehicle mount 100. The bicycle vehicle mount 100 may have a more regular volume when in the second configuration compared to the first configuration. In the second configuration the bicycle vehicle mount 100 may have a substantially cuboid shape and in the first configuration the bicycle vehicle mount 100 may have a substantially y-shape when viewed from the top. A compact second configuration may be particularly advantageous for delivery of the bicycle vehicle mount 100 to a user or supplier. In the example shown, the kickstand retaining members 2 are rotatable such that the bicycle vehicle mount 100 is in a more compact configuration when not in use. As best seen in Figures 6 and 7, the kickstand retaining members 2 may be rotatable such that they extend alongside the bicycle wheel retaining member 1. Each kickstand retaining member 2 may extend along an opposite side of the bicycle wheel retaining member 1. The kickstand retaining members 2 may be rotatable such that an angle between the bicycle wheel retaining member 1 and each of the kickstand retaining members 2 is smaller compared to when the bicycle vehicle mount 100 is in use. The angle between the bicycle wheel retaining member 1 and each of the kickstand retaining members 2 may be smaller in the second configuration than in the first configuration. In other examples, the kickstand retaining members 2 may fold or rotate about a different axis. In other examples, the kickstand retaining members 2 may be easily removed from the bicycle wheel retaining member 1.

The invention is not limited to the embodiments described herein but can be amended or modified without departing from the scope of the present invention.

## Claims

1. A two-legged kickstand bicycle vehicle mount comprising:
a bicycle wheel retaining member; and
a pair of laterally spaced kickstand retaining members longitudinally offset of the bicycle wheel retaining member.

2. The two-legged kickstand bicycle vehicle mount of claim 1, wherein the kickstand retaining members are rotatable about a hinged connection to the bicycle wheel retaining member.

3. The two-legged kickstand bicycle vehicle mount of claim 2, further comprising a brace to secure the kickstand retaining members at a required angle during use.

4. The two-legged kickstand bicycle vehicle mount of claim 3, wherein the brace can be secured in one of a plurality of positions depending on a location of legs of a kickstand.

5. The two-legged kickstand bicycle vehicle mount of any one of claims 1 to 4, wherein each kickstand retaining member comprises a channel configured to receive a respective leg of a kickstand or wherein each kickstand retaining member comprises a substantially u-shaped channel configured to receive a respective leg of a kickstand.

6. The two-legged kickstand bicycle vehicle mount of any one of claims 1 to 6, wherein each kickstand retaining member comprises a clamp member configured to clamp onto a leg of a kickstand.

7. The two-legged kickstand bicycle vehicle mount of any one of claims 1 to 7, wherein each kickstand retaining member comprises a kickstand support configured to receive the respective leg of a kickstand and/or wherein each kickstand retaining member comprises an elongate leg member.

8. The two-legged kickstand bicycle vehicle mount of claim 7, wherein each kickstand support is adjustably connected to the respective leg member and locatable in a plurality of positions along the length of the leg member.

9. The two-legged kickstand bicycle vehicle mount of any one of claims 7 or 8 when dependent on claim 5, wherein the kickstand support comprises the channel.

10. The two-legged kickstand bicycle vehicle mount of any one of claims 1 to 9, wherein the bicycle wheel retaining member comprises an elongate channel configured to receive a bicycle wheel.

11. The two-legged kickstand bicycle vehicle mount of claim 10, wherein the elongate channel is u-shaped and/or wherein the elongate channel may comprise one or more blocks in the channel to prevent movement of the bicycle wheel within the channel during use.

12. The two-legged kickstand bicycle vehicle mount of any one of claims 10 to **11,** wherein the bicycle wheel retaining member comprises an attachment means to retain the bicycle wheel during use and/or wherein the bicycle wheel retaining member is configured to receive a back bicycle wheel.

13. The two-legged kickstand bicycle vehicle mount of any one of claims 1 to 12, wherein the kickstand retaining members and the bicycle wheel retaining member are each removably connectable to a transport vehicle in use and/or wherein each of the kickstand retaining members and the bicycle wheel retaining member comprises an adjustable roof rack adapter configured to connect to a roof rack in use.

14. The two-legged kickstand bicycle vehicle mount of any one of claims 1 to 13, wherein the kickstand retaining members are rotatable such that the bicycle vehicle mount is displacable between an expanded and collapsed configuration.

15. The two-legged kickstand bicycle vehicle mount of claim 14, wherein the kickstand retaining members are rotatable such that they extend alongside the bicycle wheel retaining member and/or wherein the kickstand retaining members are rotatable such that an angle between the wheel retaining member and each of the kickstand retaining members is smaller compared to when in use.
